# EUROPÄISCHE PATENTSCHRIFT

(11) **EP 1 902 876 B1**
(45) Veröffentlichungstag und Bekanntmachung des Hinweises auf die Patenterteilung: **28.04.2010**
(21) Anmeldenummer: 06291485.8
(22) Anmeldetag: 19.09.2006
(51) Int. Cl.: B60H 1/00

(54) **Luftführungsgehäuse, insbesondere für eine Kraftfahrzeug-Klimaanlage, mit einer Verteilerklappe und Verfahren zur Regelung einer derartigen Verteilerklappe**
Air distribution case, in particular for a vehicle air conditioner, having a distribution valve and method of controlling such a distribution valve
Boîtier de distribution d'air, en particulier pour une climatisation de véhicule, le boîtier comprenant une vanne de distribution et un procédé de contrôle d'une telle vanne de distribution

(43) Veröffentlichungstag der Anmeldung: 26.03.2008
(73) Patentinhaber: Behr France Rouffach SAS, 68250 Rouffach (FR)
(72) Erfinder: Klein, Henri, 68000 Colmar (FR)
(74) Vertreter: Mantel, Berthold Friedrich

(56) Entgegenhaltungen:
- DE-A1- 4 407 424
- FR-A1- 2 717 127
- FR-A1- 2 778 151
- FR-A1- 2 789 017
- GB-A- 2 346 209

## Beschreibung

Die Erfindung betrifft ein Luftführungsgehäuse, insbesondere für eine Kraftfahrzeug-Klimaanlage.

Aus der DE 199 62 097 A1 ist eine Fahrzeug-Klimaanlage bekannt, mit einem Gehäuse und einem Heizkern, der in dem Gehäuse im Wesentlichen horizontal angeordnet ist. Das Gehäuse besitzt eine zentrale Kopfraum-Öffnung, die in einer Seitenwand des Gehäuses im Wesentlichen in der gleichen Höhe wie der Heizkern angeordnet ist, eine Defrost-Öffnung und einen Fußraum-Auslass. Eine Warmluft-Führung ist oberhalb des Heizkerns angeordnet, um warme Luft, die durch den Heizkern hindurchtritt, zu führen. Warme Luft, die mittels der Warmluft-Führung geführt wird, wird mit kühler Luft, die den Heizkern im Bypass umgeht, gemischt und strömt in Richtung zu der Defrost-Öffnung durch einen Luftanschluss hindurch, der durch einen Endbereich der Warmluft-Führung gebildet ist. Dadurch wird der Öffnungsbereich des Luftanschlusses einfach vergrößert, indem die Länge der Warmluft-Führung vergrößert wird, ohne die Größe der Fahrzeug-Klimaanlage zu vergrößern. Als eine Folge wird eine ausreichende Menge an Luft in die Defrost-Öffnung eingeführt.

Zur Veränderung der Lufttemperatur der Mittel- und Seitendüsen bei einer Heiz- und Belüftungsanlage eines Kraftfahrzeugs ist aus der EP 0 461 421 A1 bekannt, den Verteilerraum für die von einem Mischraum für Frisch- und Warmluft kommende Luft einen Bypass zuzuordnen, der unmittelbar hinter dem Wärmetauscher abzweigt und die Anordnung der Lufteintrittsöffnungen zu den Luftleitkanälen der Seitendüse so mit der Verteilerklappe abzustimmen, dass in einer bestimmten Stellung der Verteilerklappe zusätzliche Warmluft unmittelbar den Seitendüsen zuführbar ist.

Die EP 0447 304 B1 offenbart eine Vorrichtung zum Belüften und Heizen eines Fahrgastraums eines Kraftfahrzeugs mit einer in einem Gehäuse angeordneten, um eine Schwenkachse verschwenkbare Verteilerklappe, welche die Luftverteilung auf wenigstens zwei aneinander angrenzende Luftaustritte zur Verteilung von Frisch- und Warmluft in verschiedene Zonen des Fahrgastraums regelt. Die Verteilerklappe weist hierbei einen ersten Teil und einen zweiten Teil auf, die sich jeweils beiderseits der Schwenkachse der Verteilerklappe erstrecken, wobei der erste Klappenteil wenigstens zwei Umlenkbleche aufweist, die axial und im Winkel zueinander verschoben sind, um die Luftverteilung durch die Austritte der ersten Leitung selektiv zu regeln, und wobei der zweite Klappenteil ein Umlenkelement zur Regelung der Luftverteilung am Austritt der zweiten Leitung enthält. Hierbei weist die erste Leitung zwei Innenwände auf, die drei aneinander angrenzende Luftaustritte bildet, nämlich einen mittleren Austritt und zwei seitliche Austritte. Der erste Teil der Verteilerklappe enthält drei axial und im Winkel zueinander verschobene Umlenkelemente und zwei seitliche Umlenkelemente, die sich zur Steuerung des mittleren Austritts bzw. der beiden vorgenannten seitlichen Austritte eignen, während der zweite Teil der Verteilerklappe ein einziges Umlenkelement enthält, welches zur Regelung des Austritts der zweiten Leitung geeignet ist. Der mittlere Austritt mündet in eine Entlüftungsöffnung in Höhe der Instrumententafel ein. Die beiden seitlichen Austritte münden in Entfrostungsöffnungen der Windschutzscheibe ein, und der Austritt der zweiten Leitung mündet in eine Öffnung im unteren Teil des Fahrgastraums ein.

GB 2 346 209 offenbart als nächsten Stand der Technik einluftführungsgehäuse mit einer Verteilerklappe für Mittel-, Seiten- und Defrostdüsen. Ferner ist aus dem Dokument FR 278 9017 eine Verteilerklappe für einen zentralen Belüftungskanal und zwei lateralen Kanälen zu Seitendüsen bekannt.

Derartige Verteilerklappen lassen noch Wünsche offen, unter anderem in Hinblick auf die Defrostfunktion und den Komfort im Defrostbetrieb.

Es ist Aufgabe der Erfindung, ein verbessertes Luftführungsgehäuse mit einer Verteilerklappe zur Verfügung zu stellen.

Diese Aufgabe wird gelöst durch ein Luftführungsgehäuse mit den Merkmalen des Anspruchs 1. Vorteilhafte Ausgestaltungen sind Gegenstand der Unteransprüche.

Erfindungsgemäß ist eine Verteilerklappe in einem Luftführungsgehäuse vorgesehen, insbesondere für eine Kraftfahrzeug-Klimaanlage, mit mindestens einer in einem Luftführungsgehäuse um eine Schwenkachse verschwenkbar angeordneten Verteilerklappe, welche die Luftverteilung auf mehrere Luftkanäle regelt, die vom Luftführungsgehäuse ausgehen, wobei mindestens einer der Luftkanäle zur Seitenscheibenentfrostung und mindestens einer der Luftkanäle zur Frontscheibenentfrostung dient, und in jeder Betriebsstellung der Verteilerklappe, in welcher warme Luft dem Fahrzeuginnenraum zuführbar ist, die Verteilerklappe zumindest eine Mindestöffnung durch den oder die Luftkanäle zur Seitenscheibenentfrostung freilässt.

Die Verteilerklappenöffnung zu dem oder den Luftkanälen zur Seitenscheibenentfrostung ist vorzugsweise derart ausgebildet, dass zumindest in Betriebsstellungen "warm" 5% bis 10% der gesamten, durch die Verteilerklappe geregelten Luftmenge durch die Luftkanäle zur Seitenscheibenentfrostung geleitet wird. Diese Luftmenge stellt ein ausreichendes Entfrosten der Seitenscheiben sicher und beeinträchtigt den Komfort im Fahrzeuginnenraum nicht.

Die Verteilerklappe ist eine Schmetterlingsklappe, wobei die Flügel in einem Winkel von weniger als 180°, insbesondere weniger als 120° zueinander angeordnet sind. Insbesondere bevorzugt sind mehrere Abschnitte in Schwenkachsenlängsrichtung der Verteilerklappe vorgesehen, in welchen die Flügel unterschiedliche Winkel einnehmen.

Die Verteilerklappe weist einzelne Abschnitte auf, wobei vorzugsweise der Abschnitt, welcher dem Luftkanal zur Regelung der Seitenscheibenentfrostung zugeordnet ist, um einen Winkel gegenüber dem Abschnitt, welcher dem Luftkanal zur Regelung der Frontscheibenentfrostung zugeordnet ist, verdreht angeordnet ist. Dieser Winkel beträgt vorzugsweise 5° bis 25°, insbesondere bevorzugt 10° bis 20°. Zwischen jeweils zwei diesen verdreht angeordneten Abschnitten ist vorzugsweise ein etwa in radialer Richtung verlaufender Übergangsbereich vorgesehen, welcher Querströmungen der Luft verhindert und die Stabilität der Verteilerklappe erhöht.

Zur Erhöhung der Steifigkeit können an den Flächen der Verteilerklappe Versteifungsrippen vorgesehen sein.

Die Verteilerklappe weist einzelne Abschnitte auf, wobei vorzugsweise der Abschnitt, welcher dem Luftkanal zur Seitendüse zugeordnet ist, um einen Versatz gegenüber dem Abschnitt, welcher dem Luftkanal zur Mitteldüse zugeordnet ist, versetzt, insbesondere parallel versetzt, angeordnet ist. Der Versatz beträgt vorzugsweise 2 bis 10 mm, insbesondere bevorzugt 5 +/- 3 mm.

Vorzugsweise ist der Abschnitt, welcher dem Luftkanal zur Regelung der Seitenscheibenentfrostung zugeordnet ist, in Längsrichtung der Verteilerklappe gesehen kürzer ausgebildet ist, als der Abschnitt, welcher dem Luftkanal zur Seitendüse zugeordnet ist, und/oder der Abschnitt, welcher dem Luftkanal zur Regelung der Frontscheibenentfrostung zugeordnet ist, in Längsrichtung der Verteilerklappe gesehen länger ausgebildet ist, als der Abschnitt, welcher dem Luftkanal zur Mitteldüse zugeordnet ist. Bevorzugt ist die Gesamtlänge der Abschnitte, die der Entfrostung zugeordnet sind, gleich der Gesamtlänge der Abschnitte, die den Mittel- und Seitendüsen zugeordnet sind, jedoch können sich die Gesamtlängen auch unterscheiden.

Die Verteilerklappe sieht vorzugsweise eine Zwangsbelüftung durch die Seitendüse vor. Diese Zwangsbelüftung wird bevorzugt durch einen Versatz der Klappenflächen der Verteilerklappe, welche den Mittel- und Seitendüsen zugeordnet ist, sichergestellt, wofür die entsprechenden Klappenflächenabschnitte versetzt zueinander angeordnet sind. Insbesondere bevorzugt sind die Flächen parallel zueinander angeordnet.

Im Folgenden wird die Erfindung anhand eines Ausführungsbeispiels unter Bezugnahme auf die Zeichnung im Einzelnen erläutert. In der Zeichnung zeigen:

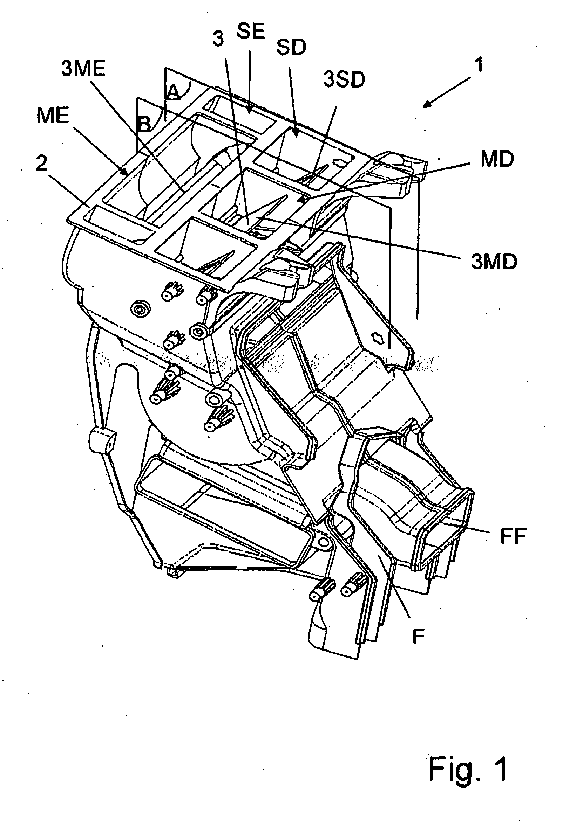

Fig. 1 eine perspektivische Darstellung eines Luftführungsgehäuses mit Verteilerklappe einer Kraftfahrzeug-Klimaanlage gemäß dem Ausführungsbeispiel,
Fig. 2 einen Schnitt in der Ebene A von Fig. 1,
Fig. 3 einen Schnitt in der Ebene B von Fig. 1,

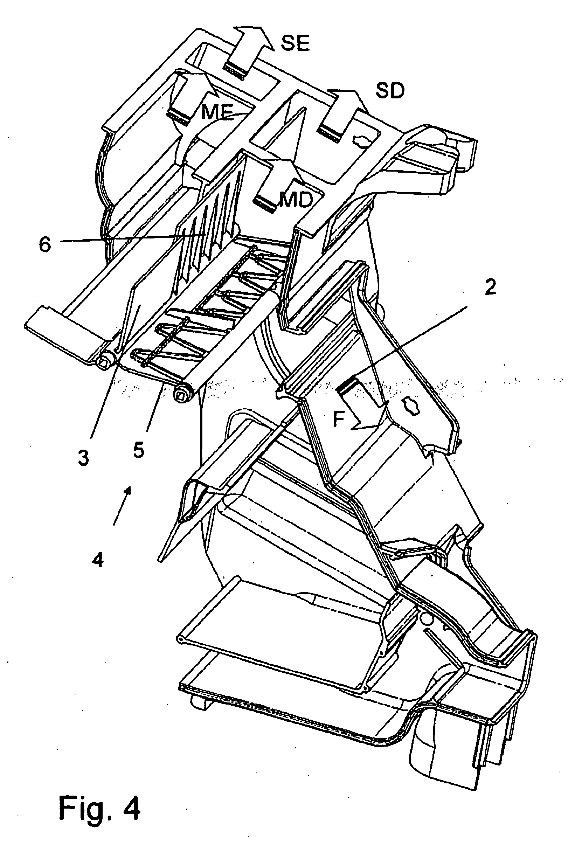

Fig. 4 eine teilweise, aufgeschnittene Darstellung des Luftführungsgehäuses mit zur Hälfte dargestellter Verteilerklappe,
Fig. 5 eine perspektivische Ansicht der Verteilerklappe, wie sie in dem Luftführungsgehäuse von Fig. 1 angeordnet ist,
Fig. 6 eine Seitenansicht der Verteilerklappe von Fig. 5,

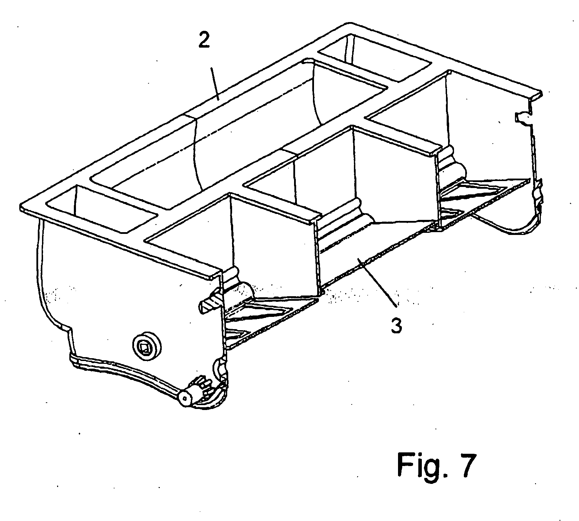

Fig. 7 eine andere perspektivische, teilweise Ansicht des Luftführungsgehäuses mit Verteilerklappe,
Fig. 8 eine perspektivische Ansicht zur Verdeutlichung des Zusammenbaus des Luftführungsgehäuses und des Einbaus der Verteilerklappe,
Fig. 9 eine weiter aufgerissene, Fig. 8 entsprechende Ansicht zur Verdeutlichung des Zusammenbaus, und
Fig. 10 einen Schnitt in Längsrichtung durch eine Kraftfahrzeug-Klimaanlage gemäß einer Variante.

Eine Kraftfahrzeug-Klimaanlage 1 mit in einem aus Kunststoff spritzgegossenen Luftführungsgehäuse 2 angeordneten Verdampfer und Heizer (nicht dargestellt) dient der Lufttemperierung des Fahrzeuginnenraums eines Kraftfahrzeugs. Die Luftverteilung auf die Mittel- und Seitendüsen, d.h. auf die Luftkanäle MD bzw. SD, sowie für die Frontscheiben- und Seitenscheibenentfrostung, d.h. auf die Luftkanäle ME bzw. SE, erfolgt mittels einer vorliegend stufenlos verstellbaren, als Kunststoff-Spritzgussteil ausgebildeten Verteilerklappe 3, die im Endbereich eines Mischraums 4 und an der Mündung der Luftkanäle MD, SD, ME, SE um ihre Längsachse innerhalb eines durch im Luftführungsgehäuse ausgebildete Anschlagflächen vorgegebenen Winkels verschwenkbar angeordnet ist. Benachbart der im Wesentlichen zweiflügeligen Verteilerklappe 3 ist eine einflügelige Fußraumklappe 5 angeordnet, die den Luftstrom durch einen Luftkanal F zum Frontfußraum regelt, wobei sie um eine Schwenkachse verschwenkbar ist, die parallel zur Schwenkachse der Verteilerklappe 3 angeordnet ist. Der Flügel der Fußraumklappe 5 schwenkt in den Mischraum 4 hinein, während der entsprechende Flügel der Verteilerklappe 3, welcher den Luftstrom zu den Mittel- und Seitendüsen regelt, in Richtung der Luftkanäle MD und SD schwenkt und in keiner Stellung in den Mischraum 4 hineinragt. Der zweite Flügel der Verteilerklappe 3, welcher der Defrost-Öffnung zugeordnet ist, schwenkt ebenfalls in Richtung der entsprechenden Luftkanäle ME und SE. Ein weiterer Luftkanal FF zweigt weiter unten vom Mischraum 4 ab und führt Luft zum Fondbereich.

Dem Mischraum 4 wird direkt vom Verdampfer kommende Kaltluft und/oder vom Heizer kommende Warmluft mittels einer oder mehrerer Mischklappen (nicht dargestellt) regelbar zugeführt und in demselben vermischt, bevor die temperierte Luft in die einzelnen Luftkanäle gelangt. Das Vorsehen von in der Regel mittels Klappen o.ä. regelbaren Bypässen zur Verteilerklappe und/oder Mischklappe, um bspw. eine Temperaturschichtung zu erreichen, ist prinzipiell möglich.

Vorliegend ist eine einzonige Klimaanlage vorgesehen, jedoch kann eine entsprechende Ausgestaltung auch für eine mehrzonige Klimaanlage vorgesehen sein, wobei im Falle einer Zonenunterteilung von Fahrer- und Beifahrerseite eine mittige Trennwand sowie eine unterteilte Verteilerklappe mit getrennter Regelung der Seiten vorgesehen ist.

Um eine Entfrostung der Seitenscheiben sicherzustellen, ist vorliegend vorgesehen, dass zumindest in allen "warmen" Betriebsstellungen, d.h. wenn Luft den Heizer durchströmt, zwischen 5% und 10% der Gesamtluftmenge zu den Seitenscheiben gelangt, d.h durch die entsprechenden Luftkanäle SE strömt. Dies wird unter anderem dadurch sichergestellt, dass die Verteilerklappe 3 die außenseitig angeordneten Luftkanäle SE, über welche die Luft zu den Seitenscheiben gelangt, schneller freigibt als den mittig angeordneten Luftkanal ME, über welchen die Luft zur Frontscheibe gelangt.

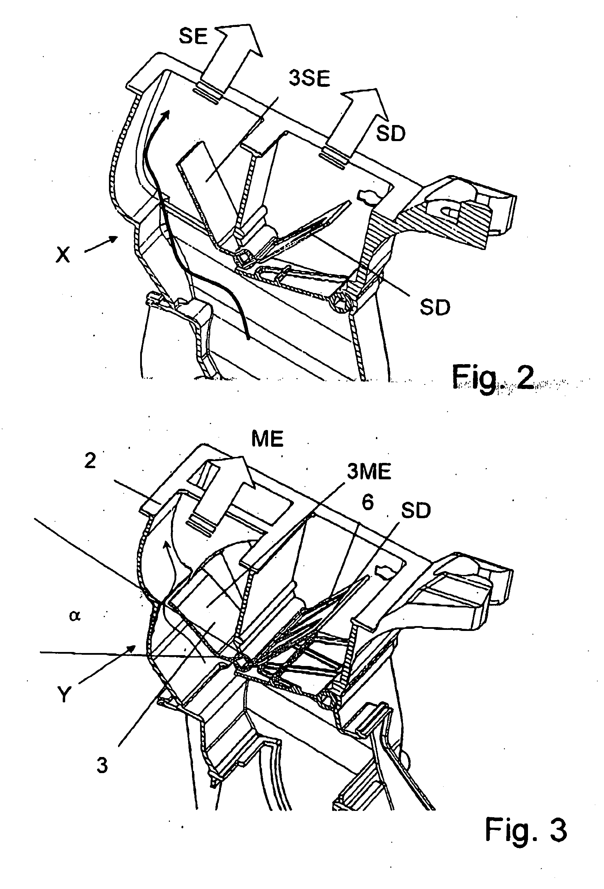

Wie bei Vergleich der Figuren 2 und 3 ersichtlich, ist das Luftführungsgehäuse 2 in den Bereichen, die in den Figuren durch die Pfeile X und Y bezeichnet sind, unterschiedlich ausgebildet, so dass die Öffnung zum Luftkanal SE früher als die Öffnung zum Luftkanal ME öffnet. Dies wird durch eine weiter hochgezogene Wand bewirkt, welche den Luftkanal zur Verteilerklappe 3 verringert. Eine Querschnittserweiterung in Form eines Wölbung nach außen, beginnt beim Luftkanal SE für die Seitenscheibenentfrostung weiter unten, d.h. in Bezug auf den Schwenkwinkel der Verteilerklappe 3 früher, als beim Luftkanal ME für die Entfrostung der Frontscheibe. In einem Winkel α (siehe Fig. 3) von bevorzugt 10° bis 40°, vorliegend ca. 30°, ist ein Spalt zwischen dem Luftführungsgehäuse 2 und der Verteilerklappe 3 vorgesehen, welcher in jeder entsprechenden Stellung der Verteilerklappe 3 für einen (geringen) Luftstrom zur Frontscheibenentfrostung führt. Dieser Winkel α hängt vom Druckabfall in den Luftkanälen ab.

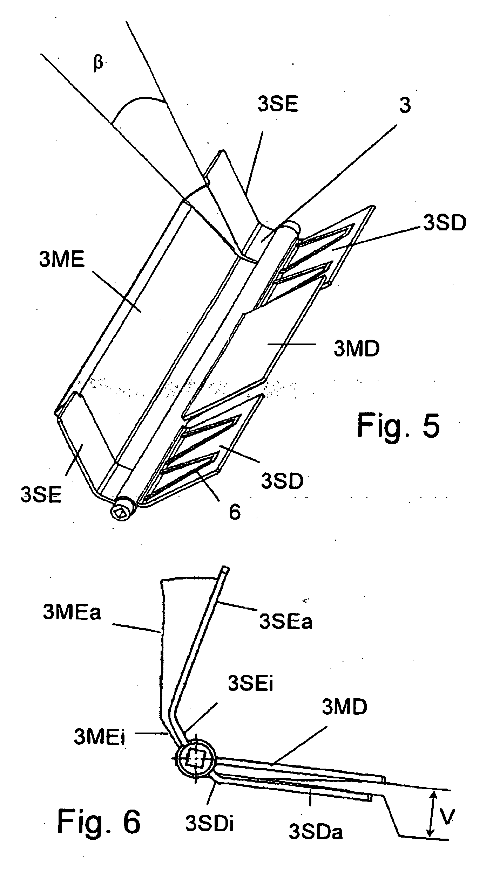

Ferner weist die Verteilerklappe 3 drei einzelne Abschnitte 3SE, 3SE und 3ME auf, wobei jeweils der in Schwenkachsenlängsrichtung äußere Abschnitt 3SE, welcher einem der Luftkanäle SE zur Regelung der Seitenscheibenentfrostung zugeordnet ist, um einen Winkel β gegenüber dem mittleren Abschnitt 3ME, welcher dem Luftkanal ME zur Regelung der Frontscheibenentfrostung zugeordnet ist, verdreht angeordnet ist (siehe Fig. 5 und 6). Der Winkel β beträgt bevorzugt 5° bis 25°, vorliegend ca. 20°, so dass jeder der äußeren, der Seitenentfrostung zugeordneten Abschnitte 3SE der Verteilerklappe 3 die entsprechende Austrittsöffnung zum Luftkanal SE schneller freigibt als der weiter mittlere und deutlich größere Abschnitt 3ME, welcher der Frontscheibenentfrostung und damit dem Luftkanal SM zugeordnet ist.

Zwischen den einzelnen Abschnitten sind in radialer Richtung verlaufende Übergangsbereiche angeordnet. Diese dienen unter anderem der Versteifung der Verteilerklappe.

Bei einer Verteilerklappenstellung innerhalb des Winkels α, wie in Fig. 3 dargestellt, ist - im Unterschied zum mittleren, der Frontscheibenentfrostung zugeordneten Bereich, d.h. dem Abschnitt 3ME - im jeweiligen äußeren Bereich der Verteilerklappe 3 der Querschnitt zwischen Luftführungsgehäuse 2 und Verteilerklappe 3 bereits erweitert ausgebildet, was durch den Winkelversatz (Winkel β) der Verteilerklappe 3 noch verstärkt wird, so dass bereits bei einer geringen Defroststellung der Verteilerklappe 3 ein relativ großer Luftstrom für die Seitenscheibenentfrostung zur Verfügung steht, während der Frontscheibe in der entsprechenden Verteilerklappenstellung nur ein relativ geringer Luftstrom zugeführt wird.

Wie aus Fig. 5 ersichtlich, weist der Abschnitt 3ME eine etwas geringere radiale Erstreckung als die beiden äußeren Abschnitte 3SE auf. Die Abschnitte 3ME und 3SE weisen einen ersten, sich in radialer Richtung bezüglich der Schwenkachse erstreckenden Innenbereich 3MEi und 3SEi auf, wobei der Winkelversatz um den Winkel β bereits in diesem Bereich vorgesehen ist. Nach einer kurzen Strecke, sind die Abschnitte 3SE und 3ME in einem Winkel von ca. 135° abgewinkelt, so dass sich ein wesentlicher Bereich der Abschnitte 3ME und 3SE (Außenbereiche 3MEa und 3SEa), vorliegend etwa vierfünftel der gesamten "radialen" Erstreckung, nicht in radialer Richtung bezüglich der Schwenkachse erstrecken (siehe Fig. 6). Die in Schwenkachsenlängsrichtung äußeren Abschnitte 3SE weisen jeweils eine Breite von etwa einem Fünftel der Breite des mittleren Abschnitts 3ME auf. Der in radialer Richtung gesehen äußerste Bereich des mittleren Außenbereichs 3MEa ist zudem leicht gekrümmt aufgebogen, wie insbesondere aus Fig. 6 ersichtlich ist, wodurch der Strömungsweg der Luft über einen etwas vergrößerten Winkelbereich versperrt wird (siehe Fig. 3).

Die Verteilerklappe 3 weist ferner drei Abschnitte 3SD und 3MD zur Regelung der Luftversorgung der Seiten- und Mitteldüsen auf, welche die Öffnungen der entsprechenden Luftkanäle SD und MD freigeben oder ganz oder teilweise verschließen. Hierbei erstreckt sich der mittlere Abschnitt 3MD in radialer Richtung bezüglich der Verteilerklappen-Schwenkachse. Der Winkel zum Innenbereich 3MEi beträgt vorliegend ca. 135°. Die seitlichen Abschnitte 3SD sind - entsprechend den Abschnitten 3SE und 3ME abgewinkelt ausgebildet, wobei der jeweilige Innenbereich 3SDi sich etwa in Verlängerung der Innenbereiche 3SEi erstreckt (siehe Fig. 6). Der Außenbereich 3SEa erstreckt sich parallel zum mittleren Abschnitt 3MD, wodurch sich ein Versatz V der Abschnitte ergibt. Der Versatz V beträgt üblicherweise zwischen 2 und 10 mm, vorliegend 5 mm.

Um die vorliegend nicht über Übergangsbereiche miteinander verbundenen Abschnitte 3SD und 3MD zu versteifen, sind Rippen 6 auf jeweils einer Klappenfläche angeordnet. Wie aus Fig. 5 ersichtlich, sind jeweils zwei Rippen 6 an den Abschnitten 3SD angeordnet, welche einen trapezförmigen Verlauf aufweisen, wobei die Basis durch den Wellenbereich der Verteilerklappe 3 gebildet ist. Im Abschnitt 3MD sind auf der den Rippen 6 der Abschnitte 3SD zugewandten Klappenfläche eine Mehrzahl, vorliegend sechs, Rippen 6 angeordnet, welche sich in radialer Richtung nach außen erstrecken und einen dreieckförmigen Verlauf ihrer Höhe aufweisen.

Dadurch, dass die den Mitteldüsen und den Seitendüsen zugeordneten Abschnitte 3MD und 3SD parallel, aber versetzt zueinander angeordnet sind, kann eine Seitendüsenleckage sichergestellt werden, während durch die Mitteldüse keine Luft strömt. Dieser Zustand ist für den Komfort im Fahrzeuginnenraum wünschenswert und stellt auch bei geschlossenen Mitteldüsen eine Zwangsbelüftung sicher, welche jedoch von den Insassen nicht als störend empfunden wird.

In Folge der abgewinkelten Außenbereiche 3SEa und 3SDa ergibt sich zwischen diesen, der Seitenscheibenentfrostung bzw. den Seitendüsen zugeordneten Bereichen, wie aus Fig. 6 ersichtlich, ein Öffnungswinkel von weniger als 90°, vorliegend ca. 80°, während sich zwischen den mittleren Bereichen, d.h. der Frontscheibenentfrostung und den Mitteldüsen zugeordneten Bereichen, ein Öffnungswinkel von mehr als 90°, vorliegend ca 95°, ergibt.

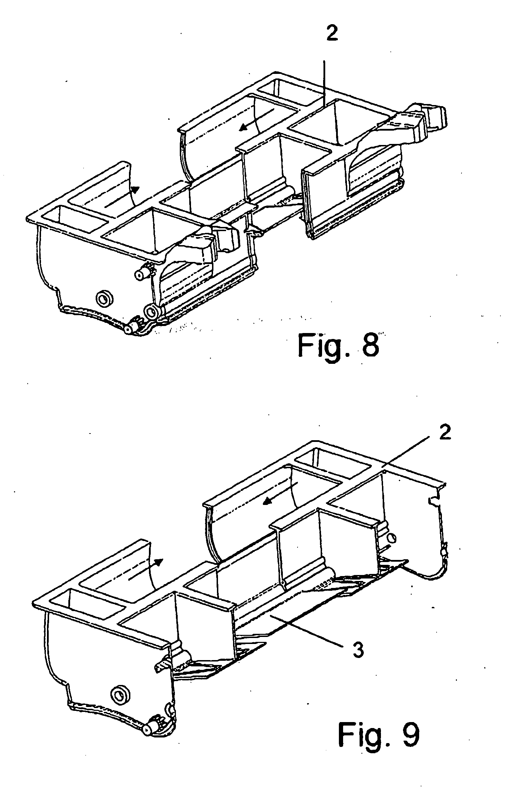

Die Montage der Verteilerklappe 3 im Luftführungsgehäuse 2 ist, wie in den Figuren 8 und 9 dargestellt, einfach möglich, wenn das Luftführungsgehäuse 2 mittig geteilt ausgebildet ist, und unter Einsetzens der Verteilerklappe 3 in eine der Hälften die Hälften zusammengeschoben und aneinander fixiert werden.

Die Funktion eines schnelleren Öffnens des Luftkanals SE zur Seitenscheibenentfrostung, wie auch die Zwangsbelüftung durch die Seitendüsen, ist natürlich auch durch eine getrennte Klappenausbildung möglich, jedoch ist hierbei die Regelung und/oder Kinematik der Koppelung der Klappen relativ aufwändig.

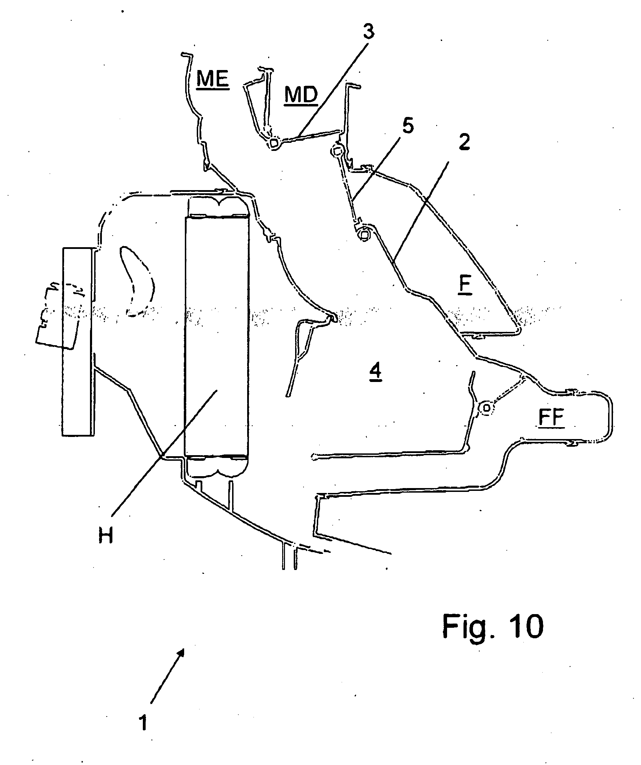

Fig. 10 zeigt einen Schnitt entlang durch eine Klimaanlage gemäß einer Variante des zuvor beschriebenen Ausführungsbeispiels, wobei sich die Verteilerklappen 3 und die durch die Verteilerklappe 3 freigebbaren Querschnitte im Luftführungsgehäuse 2 einander entsprechen, so dass die Verteilerklappe 3 wie auch deren Funktion nicht näher beschrieben wird. Die vom Verdampfer (nicht dargestellt) kommende und ggf. den Heizer H durchströmende Luft gelangt in einen Mischraum 4, von dem aus eine Mehrzahl von Luftkanälen abzweigt. Die Regelung der Luftverteilung auf den Frontbereich erfolgt mittels besagter Verteilerklappe 3 und einer Fußraumklappe 5, welche die Eintrittsöffnung zu dem Luftkanal F zum Frontfußraum regelt. Wie aus Fig. 10 ersichtlich, schließt die Verteilerklappe 3 den Luftkanal MD vollständig, wenn die Betriebsstellung 100% Defrostbetrieb, wie dargestellt, vorgesehen ist. In dieser Betriebsstellung ist zudem der Luftkanal F zum Frontfußraum wie auch der Luftkanal FF zum Fondbereich geschlossen, so dass im Wesentlichen die gesamte Luft der Entfrostung der Front- und Seitenscheiben zur Verfügung steht. Wie aus der Zeichnung jedoch nicht entnommen werden kann, ist in Folge des Versatzes der Verteilerklappe 3 eine kleine Öffnung zu den Seitendüsen offen, so dass ein (kleiner) Luftstrom zu den Seitendüsen strömt, welcher das Entfrosten der Seitendüsen unterstützt.

## Patentansprüche

1. Luftführungsgehäuse, insbesondere für eine Kraftfahrzeug-Klimaanlage (1), mit mindestens einer in dem Luftführungsgehäuse (2) um eine Schwenkachse verschwenkbar angeordneten Verteilerklappe (3), welche die Luftverteilung auf mehrere Luftkanäle (ME, SE, MD, SD) regelt, die vom Luftführungsgehäuse (2) ausgehen, wobei mindestens einer der Luftkanäle (SE) zur Seitenscheibenentfrostung, mindestens einer der Luftkanäle (ME) zur Frontscheibenentfrostung, ein Luftkanal zur Luftverteilung auf die Mitteldüsen (MD) und zwei Luftkanäle zur Luftverteilung auf die Seitendüsen (SD) dienen, wobei in jeder Betriebsstellung der Verteilerklappe (3), in welcher warme Luft dem Fahrzeuginnenraum zuführbar ist, die Verteilerklappe (3) zumindest eine Mindestöffnung zu dem oder den Luftkanälen (SE) zur Seitenscheibenentfrostung freilässt und die Verteilerklappe (3) eine Schmetterlingsklappe ist, wobei die Flügel in einem Winkel von weniger als 180°, insbesondere weniger als 120° zueinander angeordnet sind und die Verteilerklappe (3) einzelne Abschnitte (3MD, 3SD, 3ME, 3SE) aufweist, die jeweils dem Luftkanal (SE) zur Regelung der Seitenscheibenentfrostung, dem Luftkanal (ME) zur Regelung der Frontscheibenentfrostung, dem Luftkanal (MD) zur Mitteldüse und den Luftkanälen (SD) zu den Seitendüsen zugeordnet sind.

2. Luftführungsgehäuse nach Anspruch 1, **dadurch gekennzeichnet, dass** die Verteiferklappenöffnung zu dem oder den Luftkanälen (SE) zur Seitenscheibenentfrostung derart ausgebildet ist, dass zumindest in Betriebsstellungen "warm" 5% bis 10% der gesamten, durch die Verteilerklappe (3) geregelten Luftmenge durch die Luftkanäle (SE) zur Seitenscheibenentfrostung geleitet wird.

3. Luftführungsgehäuse nach einem der vorhergehenden Ansprüche, **dadurch gekennzeichnet, dass** die Verteilerklappe (3) in Längsrichtung der Schwenkachse der Verteilerklappe (3) gesehen einzelne Abschnitte (3ME, 3SE) aufweist, wobei der Abschnitt (3SE), welcher dem Luftkanal (SE) zur Regelung der Seitenscheibenentfrostung zugeordnet ist, um einen Winkel (β) gegenüber dem Abschnitt (3ME), welcher dem Luftkanal (ME) zur Regelung der Frontscheibenentfrostung zugeordnet ist, verdreht angeordnet ist.

4. Luftführungsgehäuse nach Anspruch 3, **dadurch gekennzeichnet, dass** der Winkel (β) 5° bis 25°, insbesondere 10° bis 20°, beträgt.

5. Luftführungsgehäuse nach einem der vorhergehenden Ansprüche, **dadurch gekennzeichnet, dass** die Verteilerklappe (3) in Längsrichtung der Schwenkachse der Verteilerklappe (3) gesehen einzelne Abschnitte (3MD, 3SD) aufweist, wobei der Abschnitt (3SD), welcher dem Luftkanal (SD) zur Seitendüse zugeordnet ist, um einen Versatz (V) gegenüber dem Abschnitt (3MD), welcher dem Luftkanal (MD) zur Mitteldüse zugeordnet ist, versetzt, insbesondere parallel versetzt, angeordnet ist.

6. Luftführungsgehäuse nach Anspruch 5, **dadurch gekennzeichnet, dass** der Versatz (V) 2 bis 10 mm, insbesondere 5 +/- 3 mm, beträgt.

7. Luftführungsgehäuse nach einem der vorhergehenden Ansprüche, **dadurch gekennzeichnet, dass** der Abschnitt (3SE), welcher dem Luftkanal (SE) zur Regelung der Seitenscheibenentfrostung zugeordnet ist, in Längsrichtung der Verteilerklappe (3) gesehen kürzer ausgebildet ist, als der Abschnitt (3SD), welcher dem Luftkanal (SD) zur Seitendüse zugeordnet ist, und/oder der Abschnitt (3ME), welcher dem Luftkanal (ME) zur Regelung der Frontscheibenentfrostung zugeordnet ist, in Längsrichtung der Verteilerklappe (3) gesehen länger ausgebildet ist, als der Abschnitt (3MD), welcher dem Luftkanal (MD) zur Mitteldüse zugeordnet ist.

8. Luftführungsgehäuse nach einem der vorhergehenden Ansprüche, **dadurch gekennzeichnet, dass** die Verteilerklappe (3) eine Zwangsbelüftung durch die Seitendüsen (SD) vorsieht.

## Claims

1. An air distribution case, in particular for a motor vehicle air-conditioner (1), comprising at least one distribution valve (3), which is disposed pivotably about a pivot axis in the air distribution case (2) and controls the distribution of air among different air ducts (ME, SE, MD, SD) originating from the air distribution case (2), wherein at least one of the air ducts (SE) is used for side window defrosting, at least one of the air ducts (ME) is used for windshield defrosting, one air duct is used to distribute air among the center nozzles (MD), and two air ducts are used to distribute air among the lateral nozzles (SD), wherein in every operating position of the distribution valve (3) in which warm air can be supplied to the passenger compartment, the distribution valve (3) exposes at least one minimum opening to the air duct or air ducts (SE) for side windows defrosting, and the distribution valve (3) is a butterfly flap, wherein the wings are disposed at an angle of less than 180°, particularly less than 120° relative to each other, and the distribution valve (3) comprises individual sections (3MD, 3SD, 3ME, 3SE) which are each associated with the air duct (SE) for controlling the side window defrosting, the air duct (ME) for controlling the windshield defrosting, the air duct (MD) to the center nozzle, and the air ducts (SD) to the lateral nozzles.

2. The air distribution case according to claim 1, **characterized in that** the distribution valve opening to the air duct or air ducts (SE) for side window defrosting is designed such that at least in the "warm" operating positions 5% to 10% of the entire air volume controlled by the distribution valve (3) is conducted through the air ducts (SE) for side window defrosting.

3. An air distribution case according to any one of the preceding claims, **characterized in that**, viewed in the longitudinal direction of the pivot axis of the distribution valve (3), the distribution valve (3) comprises individual sections (3ME, 3SE), wherein the section (3SE) associated with the air duct (SE) for controlling the side window defrosting is disposed rotated by an angle (β) relative to the section (3ME) associated with the air duct (ME) for controlling the windshield defrosting.

4. The air distribution case according to claim 3, **characterized in that** the angle (β) is 5° to 25°, in particular 10° to 20°.

5. An air distribution case according to any one of the preceding claims, **characterized in that**, viewed in the longitudinal direction of the pivot axis of the distribution valve (3), the distribution valve (3) comprises individual sections (3ME, 3SE), wherein the section (3SD) associated with the air duct (SD) to the lateral nozzle is disposed offset, in particular offset in parallel, by an offset (V) relative to the section (3MD) associated with the air duct (MD) to the center nozzle.

6. The air distribution case according to claim 5, **characterized in that** the offset (V) is 2 to 10 mm, in particular 5 +/- 3 mm.

7. An air distribution case according to any one of the preceding claims, **characterized in that**, viewed in the longitudinal direction of the distribution valve (3), the section (3SE) associated with the air duct (SE) for controlling the side window defrosting is designed shorter than the section (3SD) associated with the air duct (SD) to the lateral nozzle, and/or that, viewed in the longitudinal direction of the distribution valve (3), the section (3ME) associated with the air duct (ME) for controlling the windshield defrosting is designed longer than the section (3MD) associated with the air duct (MD) to the center nozzle.

8. An air distribution case according to any one of the preceding claims, **characterized in that** the distribution valve (3) provides for forced ventilation by the lateral nozzle (SD).

## Revendications

1. Carter de guidage d'air, en particulier pour un système de climatisation (1) d'un véhicule automobile, comprenant au moins un volet répartiteur (3) disposé dans le carter de guidage d'air (2) en pouvant pivoter autour d'un axe de pivotement, volet répartiteur qui régule la répartition d'air à plusieurs conduits d'air (ME, SE, MD, SD) qui partent du carter de guidage d'air (2), où au moins l'un des conduits d'air (SE) sert au dégivrage des vitres latérales, au moins l'un des conduits d'air (ME) sert au dégivrage du pare-brise, un conduit d'air servant à la répartition d'air aux buses centrales (MD) et deux conduits d'air servant à la répartition d'air aux buses latérales (SD) où, dans chaque position de fonctionnement du volet répartiteur (3) suivant laquelle de l'air chaud peut être fourni à l'habitacle du véhicule, le volet répartiteur (3) libère au moins une ouverture minimale donnant sur le ou les conduits d'air (SE) servant au dégivrage des vitres latérales, et le volet répartiteur (3) est un volet papillon où les ailettes sont disposées, les unes par rapport aux autres, suivant un angle de moins de 180°, en particulier de moins de 120°, et le volet répartiteur (3) présente certaines parties (3MD, 3SD, 3ME, 3SE) qui sont associées, respectivement, au conduit d'air (SE) servant à la régulation du dégivrage des vitres latérales, au conduit d'air (ME) servant à la régulation du dégivrage du pare-brise, au conduit d'air (MD) menant à la buse centrale et aux conduits d'air (SD) menant aux buses latérales.

2. Carter de guidage d'air selon la revendication 1, **caractérisé en ce que** l'ouverture du volet répartiteur donnant sur le ou les conduits d'air (SE) servant au dégivrage des vitres latérales est configurée de manière telle, qu'au moins dans des positions de fonctionnement réglées sur "chaud", une quantité de 5 % à 10 % du débit d'air total régulé par le volet répartiteur (3) soit dirigée à travers les conduits d'air (SE) servant au dégivrage des vitres latérales.

3. Carter de guidage d'air selon l'une ou l'autre des revendications précédentes, **caractérisé en ce que** le volet répartiteur (3), vu dans le sens de la longueur de l'axe de pivotement du volet répartiteur (3), présente différentes parties (3ME, 3SE), où la partie (3SE), qui est associée au conduit d'air (SE) servant à la régulation du dégivrage des vitres latérales, est disposée en étant déplacée en torsion, d'un angle (β), par rapport à la partie (3ME) qui est associée au conduit d'air (ME) servant à la régulation du dégivrage du pare-brise.

4. Carter de guidage d'air selon la revendication 3, **caractérisé en ce que** l'angle (β) est compris entre 5° et 25°, en particulier entre 10° et 20°.

5. Carter de guidage d'air selon l'une quelconque des revendications précédentes, **caractérisé en ce que** le volet répartiteur (3), vu dans le sens de la longueur de l'axe de pivotement du volet répartiteur (3), présente différentes parties (3MD, 3SD), où la partie (3SD), qui est associée au conduit d'air (SD) menant à la buse latérale, est disposée en étant décalée, en particulier décalée de façon parallèle, d'un décalage (V), par rapport à la partie (3MD) qui est associée au conduit d'air (MD) menant à la buse centrale.

6. Carter de guidage d'air selon la revendication 5, **caractérisé en ce que** le décalage (V) est de 2 mm à 10 mm, en particulier de 5 ± 3 mm.

7. Carter de guidage d'air selon l'une quelconque des revendications précédentes, **caractérisé en ce que** la partie (3SE) qui est associée au conduit d'air (SE) servant à la régulation du dégivrage des vitres latérales est, vue dans le sens de la longueur du volet répartiteur (3), configurée en étant plus courte que la partie (3SD) qui est associée au conduit d'air (SD) menant à la vitre latérale, et / ou **en ce que** la partie (3ME) qui est associée au conduit d'air (ME) servant à la régulation du dégivrage du pare-brise est, vue dans le sens de la longueur du volet répartiteur (3), configurée en étant plus longue que la partie (3MD) qui est associée au conduit d'air (MD) menant à la buse centrale.

8. Carter de guidage d'air selon l'une quelconque des revendications précédentes, **caractérisé en ce que** le volet répartiteur (3) prévoit une ventilation forcée à travers la buse latérale (SD).
